# EUROPÄISCHE PATENTSCHRIFT

(11) **EP 4 170 291 B1**
(45) Veröffentlichungstag und Bekanntmachung des Hinweises auf die Patenterteilung: **31.01.2024**
(21) Anmeldenummer: 22199725.7
(22) Anmeldetag: 05.10.2022
(51) Int. Cl.: G01D 5/38

(54) **OPTISCHE POSITIONSMESSEINRICHTUNG**
OPTICAL POSITION MEASURING DEVICE
DISPOSITIF OPTIQUE DE MESURE DE POSITION

(30) Priorität: 20.10.2021 DE 102021211814
(43) Veröffentlichungstag der Anmeldung: 26.04.2023
(73) Patentinhaber: Dr. Johannes Heidenhain GmbH, 83301 Traunreut (DE)
(72) Erfinder: KÄLBERER, Thomas, 86529 Schrobenhausen (DE)

(56) Entgegenhaltungen:
- EP-A1- 0 590 162
- EP-A1- 3 059 554
- EP-A1- 3 477 264
- EP-A2- 2 848 899

## Beschreibung

### GEBIET DER TECHNIK

Die vorliegende Erfindung betrifft eine optische Positionsmesseinrichtung, die zur hochgenauen Positionsmessung von zwei zueinander entlang mindestens zweier Messrichtungen beweglicher Objekte geeignet ist. Die beiden Objekte sind hierbei jeweils mit Maßstäben verbunden.

### STAND DER TECHNIK

Es sind optische Positionsmesseinrichtungen basierend auf interferentiellen Abtastprinzipien bekannt, in denen an einer Messteilung eines Maßstabs ein Beleuchtungsstrahlenbündel durch Beugung in unterschiedliche Teilstrahlenbündel aufspalten wird, die im Gefolge einen Abtaststrahlengang durchlaufen und dabei einen oder mehrere weitere Maßstäbe beaufschlagen. Nach der Wiedervereinigung geeigneter Teilstrahlenbündel ergeben sich bei einer Verschiebung des Maßstabs gegenüber einem anderen Maßstab aus der Interferenz der beiden Teilstrahlenbündel periodische Signale in einer Detektionseinheit. Durch das Zählen der Signalperioden in der Detektionseinheit kann auf das Ausmaß der Verschiebung der beiden Maßstäbe bzw. der mit den Maßstäben verbundenen Objekte geschlossen werden.

Derartige optische Positionsmesseinrichtungen werden z.B. für hochgenaue Positionsmessungen in der Halbleiterindustrie eingesetzt, wo etwa Belichtungsmasken für die Photolithographie relativ zu einem Wafer mit Geschwindigkeiten von mehr als einem Meter pro Sekunde bewegt werden; dabei müssen Positioniergenauigkeiten im Bereich weniger Nanometer und darunter eingehalten werden. Ein maßgeblicher Vorteil gitterbasierter Positionsmesseinrichtungen gegenüber Interferometern besteht darin, dass die interferierenden Teilstrahlenbündel nur sehr kurze Wege zurücklegen müssen. Damit werden diese kaum durch Umwelteinflüsse wie Luftdruck-, Temperatur- und Feuchtigkeitsschwankungen beeinträchtigt, die z.B. über einen schwankenden Brechungsindex der Luft die Messung verfälschen könnten.

Aus der WO 2008/138501 A1 ist eine optische Positionsmesseinrichtung bekannt, die zwei gekreuzte Maßstäbe umfasst, die jeweils Messteilungen mit periodisch angeordneten Strichen bzw. Gitterbereichen quer zur gemeinsamen Messrichtung aufweisen. Zur Erzeugung der positionsabhängigen Signale wird ein interferentielles Abtastprinzip verwendet. Mittels einer solchen Positionsmesseinrichtung lässt sich die Position eines in zwei Richtungen beweglichen Tisches entlang einer ersten Messrichtung x hochgenau erfassen, unabhängig von der Position des Tisches entlang einer anderen, zweiten Messrichtung y. Verwendet man zwei solcher Positionsmesseinrichtungen, die orthogonal zueinander angeordnet sind, so lässt sich die Position des Tisches auch entlang der zweiten Messrichtung y hochgenau erfassen, diesmal unabhängig von der Position des Tisches entlang der ersten Messrichtung x.

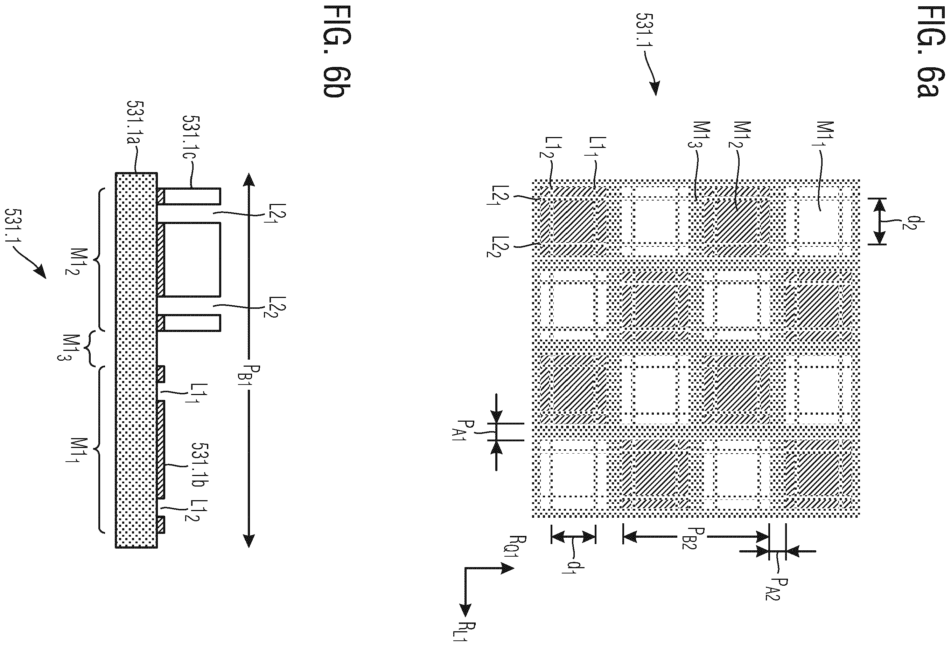

Eine vergleichbare Anordnung mit einer interferentiellen, optischen Positionsmesseinrichtung ist desweiteren auch aus der US 2009/0135388 A1 bekannt. Diese wird dazu verwendet, die Position eines beweglichen Tisches in einer Halbleiter-Fertigungseinrichtung in einer horizontalen Bewegungsebene gegenüber einem Werkzeug zu bestimmen. Auf dem Tisch kann z.B. ein Wafer angeordnet sein, beim Werkzeug kann es sich um ein Belichtungsobjektiv handeln. Im Beispiel der Figur 6B ist hierbei am beweglichen Tisch ein erster Maßstab angeordnet, der als zweidimensionales Gitter ausgebildet ist; ein zweiter Maßstab ist ebenfalls als zweidimensionales Gitter ausgebildet und gegenüber dem ersten Maßstab stationär angeordnet. Mithilfe einer derartigen Anordnung kann die Bewegung des Tisches in einer horizontalen xy-Bewegungsebene erfasst werden.

Generell resultieren bei der interferentiellen Abtastung von Maßstäben periodische Positionsfehler. Diese werden auch als Interpolationsfehler bezeichnet und beeinträchtigen die Messgenauigkeit in unerwünschter Art und Weise. Den beiden zitierten Dokumenten sind keine Maßnahmen zu entnehmen, die in optischen Positionsmesseinrichtungen mit gekreuzten Maßstäben zur Minimierung derartiger Positionsfehler bzw. Interpolationsfehler geeignet wären.

Eine weitere Längen- oder Winkelmeßeinrichtung ist aus der EP 0 590 162 A1 bekannt.

### ZUSAMMENFASSUNG DER ERFINDUNG

Der vorliegenden Erfindung liegt die Aufgabe zugrunde, eine hochgenaue optische Positionsmesseinrichtung mit gekreuzt angeordneten Maßstäben anzugeben, die eine Positionsmessung mit möglichst geringen Positionsfehlern gewährleistet.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen, die in den abhängigen Ansprüchen aufgeführt sind.

Die erfindungsgemäße optische Positionsmesseinrichtung dient zur Erfassung der Relativposition mindestens zweier Maßstäbe, die entlang zweier Messrichtungen zueinander beweglich sowie in unterschiedlichen Ebenen und gekreuzt zueinander angeordnet sind, wobei die optische Positionsmesseinrichtung mindestens zwei Maßstäbe, eine Lichtquelle und eine Detektionseinheit aufweist. Hierbei weisen die beiden Maßstäbe jeweils mindestens eine Messteilung mit periodisch entlang mindestens einer Messrichtung angeordneten Gitterbereichen mit unterschiedlichen optischen Eigenschaften auf; die Längserstreckungsrichtungen der Maßstäbe sind jeweils parallel zu einer ersten oder zweiten Messrichtung orientiert. Die mindestens zwei Maßstäbe sind so eingerichtet, dass am ersten Maßstab die Aufspaltung eines von der Lichtquelle emittierten Beleuchtungsstrahlenbündels in mindestens zwei Teilstrahlenbündel erfolgt. Die Teilstrahlenbündel beaufschlagen nachfolgend den zweiten Maßstab und erfahren eine Rückreflexion in Richtung des ersten Maßstabs. Die zurückreflektierten Teilstrahlenbündel treffen erneut auf dem ersten Maßstab auf und werden dort wiedervereinigt, so dass anschließend mindestens ein resultierendes Signalstrahlenbündel in Richtung der Detektionseinheit propagiert, über die ein oder mehrere positionsabhängige Abtastsignale bezüglich der Relativbewegung der Maßstäbe entlang der ersten oder zweiten Messrichtung erzeugbar sind. Die Messteilung mindestens eines Maßstabs ist als zweidimensionales Kreuzgitter ausgebildet ist, welches eine Filterwirkung dergestalt besitzt, dass am Kreuzgitter störende höhere Beugungsordnungen unterdrückt werden. Das Kreuzgitter weist schachbrettartig angeordnete erste und zweite flächige Messteilungsbereiche mit unterschiedlichen optischen Eigenschaften auf, die entlang der Längs-Erstreckungsrichtung periodisch mit einer ersten Bereichs-Periodizität und entlang einer Quer-Erstreckungsrichtung des Kreuzgitters, die orthogonal zur Längs-Erstreckungsrichtung orientiert ist, periodisch mit einer zweiten Bereichs-Periodizität schachbrettförmig angeordnet sind, wobei den ersten und zweiten flächigen Messteilungsbereichen ein eindimensionales oder zweidimensionales, periodisches Liniengitter überlagert ist.

Dabei ist möglich, dass das Liniengitter in jedem flächigen Messteilungsbereich jeweils einen Liniengitter-Bereich aufweist, der
- mindestens ein erstes Paar von geraden Gitterlinien umfasst, die sich über die Gesamtlänge des flächigen Messteilungsbereichs erstrecken und parallel zu einer ersten Erstreckungsrichtung in einem ersten Abstand zueinander angeordnet sind, und
- im Fall eines zweidimensionalen Liniengitters ferner ein zweites Paar von geraden Gitterlinien umfasst, die sich über die Gesamtlänge des flächigen Messteilungsbereichs erstrecken und entlang einer zweiten Erstreckungsrichtung, die senkrecht zur ersten Erstreckungsrichtung orientiert ist, in einem zweiten Abstand zueinander angeordnet sind, und
- wobei die Liniengitter-Bereiche entlang der ersten Erstreckungsrichtung die identischen Periodizitäten besitzen wie die flächigen Messteilungsbereiche des Kreuzgitters, und
- wobei im Fall eines zweidimensionalen Liniengitters die Liniengitter-Bereiche entlang der zweiten Erstreckungsrichtung ebenfalls die identischen Periodizitäten besitzen wie die flächigen Messteilungsbereiche des Kreuzgitters.

Vorzugsweise ist vorgesehen, dass entlang der ersten Erstreckungsrichtung und/oder der zweiten Erstreckungsrichtung jeweils mindestens drei voneinander durch die Gitterlinien separierte Bereiche in den flächigen Messteilungsbereichen vorliegen.

Als unterschiedliche optische Eigenschaften im Kreuzgitter können
- unterschiedliche Transmissionseigenschaften, und/oder
- unterschiedliche Reflexionseigenschaften, und/oder
- unterschiedliche phasenschiebende Wirkungen
vorgesehen sein.

In einer möglichen Ausführungsform kann das Kreuzgitter als Binärgitter mit zwei unterschiedlichen optischen Eigenschaften ausgebildet sein und die Gitterlinien des Liniengitters jeweils die andere optische Eigenschaft gegenüber den optischen Eigenschaften der ersten und zweiten flächigen Messteilungsbereiche aufweisen.

Ferner ist möglich, dass das Kreuzgitter zwischen den ersten und zweiten flächigen Messteilungsbereichen Abstandsbereiche aufweist, die eine dritte optische Eigenschaft besitzen, die sich von den optischen Eigenschaften der ersten und zweiten flächigen Messteilungsbereiche unterscheidet.

Dabei können die Abstandsbereiche zwischen den ersten und zweiten flächigen Messteilungsbereichen entlang der Längs-Erstreckungsrichtung und der Quer-Erstreckungsrichtung jeweils eine identische Breite aufweisen.

Ferner können die Abstandsbereiche strukturiert ausgebildet sein.

Es ist zudem möglich, dass eine Messteilung des zweiten Maßstabs als reflektives Lineargitter ausgebildet ist, das entlang der Längserstreckungsrichtung des zweiten Maßstabs periodisch angeordnete Messteilungsbereiche mit unterschiedlichen phasenschiebenden Wirkungen auf die darüber reflektierten Strahlenbündel aufweist.

Hierbei kann das Lineargitter des zweiten Maßstabs eine Filterwirkung dergestalt besitzen, dass bestimmte Beugungsordnungen n > 1 unterdrückt werden.

Desweiteren kann vorgesehen sein, dass mindestens eine der Messteilungen desweiteren derart ausgebildet ist, dass die darüber resultierenden Beugungsordnungen jeweils eine definierte Polarisation besitzen.

Mit Vorteil ist mindestens einer der Maßstäbe um seine Längserstreckungsrichtung verkippt angeordnet.

In einer Anordnung mit einem Tisch können mehrere erfindungsgemäße optische Positionsmesseinrichtungen vorgesehen sein, wobei
- der Tisch in einer horizontalen Bewegungsebene entlang zweier orthogonaler Messrichtungen beweglich angeordnet ist, und
- an gegenüberliegenden Seiten des Tisches zwei erste Maßstäbe angeordnet sind, und
- mindestens ein zweiter Maßstab unter einem Winkel von 90° gekreuzt sowie stationär gegenüber den beiden ersten Maßstäben in einer Ebene angeordnet ist, die entlang einer Richtung beabstandet von der horizontalen Bewegungsebene ist, wobei diese Richtung orthogonal zur Bewegungsebene orientiert ist, und

- benachbart zu den gegenüberliegenden Seiten des Tisches mit den ersten Maßstäben mehrere Abtasteinheiten stationär angeordnet ist, die jeweils eine Lichtquelle sowie eine Detektionseinheit umfassen.

Hierbei kann vorgesehen sein, dass
- die beiden ersten Maßstäbe jeweils eine reflektive Messteilung in Form eines zweidimensionalen Kreuzgitters aufweisen, die gegenüber der horizontalen Bewegungsebene um ihre Längserstreckungsrichtung verkippt angeordnet sind, und
- der zweite Maßstab mindestens zwei reflektive Messteilungen in zwei parallelen Spuren aufweist, die sich parallel zur Längserstreckungsrichtung erstrecken, wobei die Messteilungen jeweils als reflektive Lineargitter ausgebildet sind, die periodisch entlang der jeweiligen Längserstreckungsrichtung angeordnete Teilungsbereiche aufweisen und wobei die Gitterebenen der reflektiven Messteilungen parallel zur horizontalen Bewegungsebene orientiert sind.

Über die erfindungsgemäßen Maßnahmen lassen sich bei optischen Positionsmesseinrichtungen mit gekreuzten Maßstäben Positionsfehler erheblich verringern. Eine hochpräzise Positionsmessung kann sichergestellt werden.

Besonders geeignet sind entsprechende Positionsmesseinrichtungen, um z.B. die Bewegung eines Tisches in einer horizontalen Bewegungsebene zu erfassen. Es lassen sich damit translatorische Bewegungen des Tisches entlang zweier linearer Messrichtungen in der Bewegungsebene sowie eine rotatorische Bewegung des Tisches um eine zur Bewegungsebene senkrechte Rotationsachse messtechnisch hochgenau bestimmen.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt
- Figur 1: den entfalteten Abtaststrahlengang eines Ausführungsbeispiels der erfindungsgemäßen optischen Positionsmesseinrichtung;
- Figur 2a, 2b: jeweils eine Teilansicht einer erfindungsgemäßen Positionsmesseinrichtung mit gekreuzt angeordneten Maßstäben, die ein Abtastprinzip gemäß Figur 1 nutzt;
- Figur 3a, 3b: eine Draufsicht sowie eine seitliche Schnittansicht einer Anordnung mit vier erfindungsgemäßen optischen Positionsmesseinrichtungen gemäß den Figuren 2a, 2b;
- Figur 4: eine Draufsicht auf eine geeignete zweite Messteilung der erfindungsgemäßen optischen Positionsmesseinrichtung;
- Figur 5a: eine Draufsicht auf eine erste Variante eines geeigneten Kreuzgitters für die erfindungsgemäße optischen Positionsmesseinrichtung;
- Figur 5b: eine Teil-Schnittansicht der ersten Variante des Kreuzgitters aus Figur 5a;
- Figur 5c - 5e: jeweils eine Teil-Schnittansicht von Abwandlungen der ersten Variante des Kreuzgitters aus Figur 5a;
- Figur 6a: eine Draufsicht auf eine zweite Variante eines geeigneten Kreuzgitters für die erfindungsgemäße optischen Positionsmesseinrichtung;
- Figur 6b: eine Teil-Schnittansicht der zweiten Variante des Kreuzgitters;
- Figur 7a: eine Draufsicht auf eine dritte Variante eines geeigneten Kreuzgitters für die erfindungsgemäße optischen Positionsmesseinrichtung;
- Figur 7b: eine Teil-Schnittansicht der dritten Variante des Kreuzgitters.

### BESCHREIBUNG DER AUSFÜHRUNGSFORMEN

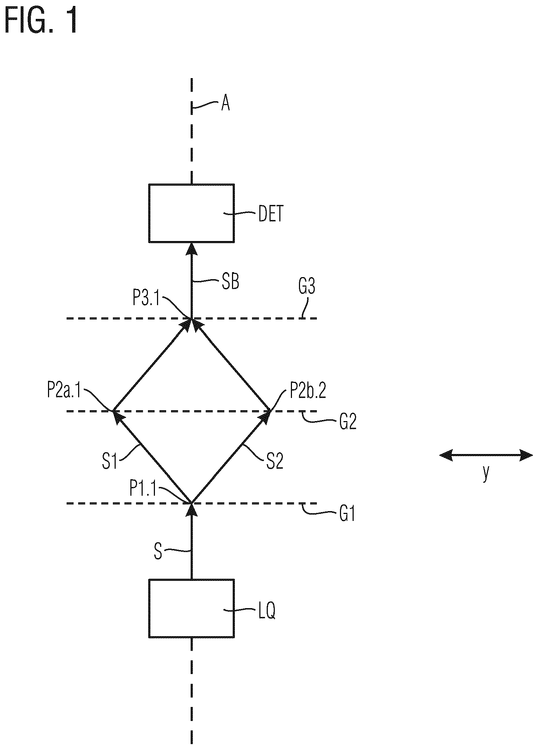

Bevor nachfolgend ein Ausführungsbeispiel der erfindungsgemäßen Positionsmesseinrichtung sowie verschiedene Varianten geeigneter Messteilungen im Detail beschrieben werden, sei zunächst anhand von Figur 1 ein beispielhafter Abtaststrahlengang für eine derartige Positionsmesseinrichtung erläutert. Die Figur zeigt den Abtaststrahlengang hierbei in einer entfalteten Darstellung.

Das von einer Lichtquelle LQ emittierte Beleuchtungsstrahlenbündel S trifft zunächst auf einen ersten Maßstab mit einer gitterförmigen ersten Messteilung G1. Am ersten Maßstab bzw. an dessen Messteilung G1 erfolgt im Auftreffpunkt P1.1 eine Aufspaltung des Beleuchtungsstrahlenbündels S in zwei Teilstrahlenbündel S1, S2. Die beiden Teilstrahlenbündel S1, S2 beaufschlagen anschließend an den Auftreffpunkten P2a.1 und P2b.2 einen zweiten Maßstab mit einer zweiten gitterförmigen Messteilung G2. Dort erfahren die Teilstrahlenbündel S1, S2 jeweils eine Beugung zurück in Richtung einer zentralen Symmetrieachse A des dargestellten Gesamtsystems. Am Auftreffpunkt P3.1 treffen die beiden Teilstrahlenbündel S1, S2 dann auf einen dritten Maßstab mit einer dritten Messteilung G3 und werden dort wiedervereinigt. Nach der im Auftreffpunkt P3.1 auf der dritten Messteilung G1 erfolgenden Beugung der beiden Teilstrahlenbündel S1, S2 propagiert anschließend mindestens ein resultierendes Signalstrahlenbündel SB, das zwei interferierende Beugungsordnungen der Teilstrahlenbündel S1, S2 enthält, in Richtung einer Detektionseinheit DET. Über diese können im Fall einer Relativbewegung der zweiten Messteilung G2 gegenüber den beiden Messteilungen G1, G3 entlang der Messrichtung y ein oder mehrere positionsabhängige Abtastsignale erzeugt werden, die eine Veränderung der Relativposition Messteilung G2 gegenüber den Messteilungen G1, G3 charakterisieren.

Der in Figur 1 dargestellte, entfaltete Abtaststrahlengang mit unterschiedlichen ersten und dritten Maßstäben bzw. Messteilungen G1, G3 entspricht dabei einer Durchlichtabtastung, bei der sämtliche Messteilungen G1, G2, G3 als Transmissions-Gitter ausgebildet sind. Alternativ hierzu kann ein derartiger Abtaststrahlengang natürlich auch als Auflichtabtastung mit einer als Reflexions-Gitter ausgebildeten zweiten Messteilung G2 ausgeführt werden. In diesem Fall sind der erste und dritte Maßstab bzw. die erste und dritte Messteilung G1, G3 identisch ausgebildet, d.h. G1 = G3; nach der Reflexion an der zweiten Messteilung G2 wird demzufolge ein weiteres Mal die erste Messteilung G1 beaufschlagt. Dabei ist es möglich, die erste und dritte Messteilung G1, G3 als Reflexions-Gitter oder als Transmissions-Gitter auszubilden.

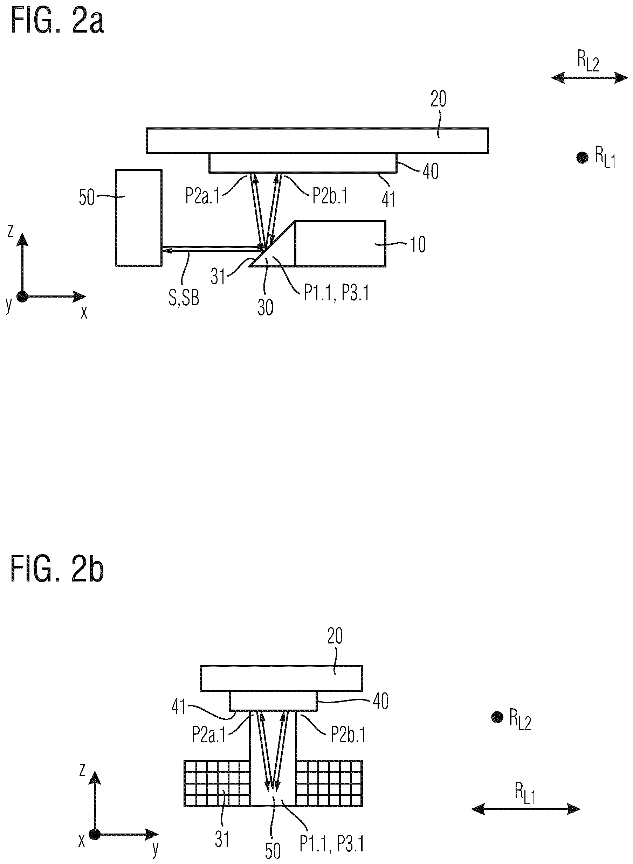

Die konkrete Umsetzung eines derartigen optischen Abtastprinzips in einem Ausführungsbeispiel einer erfindungsgemäßen Positionsmesseinrichtung mit gekreuzt zueinander angeordneten Maßstäben sei nachfolgend anhand der Figuren 2a und 2b erläutert. Im erläuterten Beispiel wird hierbei eine Auflichtabtastung mit identisch ausgebildeter erster und dritter Messteilung umgesetzt.

Die entsprechende Positionsmesseinrichtung umfasst einen ersten Maßstab 30, der an einem ersten Objekt 10 angeordnet ist. Das Objekt 10 ist entlang von zwei orthogonal zueinander orientierten Messrichtungen x, y in einer Ebene beweglich angeordnet; die zu dieser Ebene orthogonale Richtung sei nachfolgend als Richtung z bezeichnet. Die Längserstreckungsrichtung R_{L1} des ersten Maßstabs 30 ist dabei parallel zur Messrichtung y orientiert. Auf dem ersten Maßstab 31 ist eine reflektive Messteilung 31 angeordnet, die entlang mindestens einer Messrichtung x, y Gitterbereiche mit unterschiedlichen optischen Eigenschaften aufweist. Im vorliegenden Beispiel ist die erste Messteilung als zweidimensionales Kreuzgitter ausgebildet. Dieses besitzt eine Filterwirkung dergestalt, dass am Kreuzgitter störende höhere Beugungsordnungen unterdrückt werden. Die verschiedenen Gitterbereiche der ersten Messteilung 31 weisen dabei unterschiedliche phasenschiebende Wirkungen auf die darüber reflektierten Strahlenbündel auf, d.h. das Kreuzgitter ist als Reflexions-Phasengitter ausgeführt. Eine detaillierte Erläuterung des für die gewünschte Reduzierung von Positionsfehlern maßgeblichen Kreuzgitters in der erfindungsgemäßen Positionsmesseinrichtung erfolgt im weiteren Verlauf der Beschreibung.

Stationär und gekreuzt gegenüber dem ersten Maßstab 30 ist in einer entlang der z-Richtung beabstandeten Ebene ein zweiter Maßstab 40 an einem stationären zweiten Objekt 20 angeordnet. Die Längserstreckungsrichtung R_{L2} des zweiten Maßstabs 40 ist parallel zur Messrichtung x orientiert. Auf dem zweiten Maßstab 40 ist ebenfalls eine reflektive Messteilung 41 angeordnet, die entlang mindestens einer Messrichtung x, y Gitterbereiche mit unterschiedlichen optischen Eigenschaften aufweist. Im dargestellten Beispiel besteht die zweite Messteilung 41 aus einem Lineargitter, das entlang der Längserstreckungsrichtung R_{L2} des zweiten Maßstabs 40 periodisch angeordnete, rechteckförmige Messteilungsbereiche mit unterschiedlichen phasenschiebenden Eigenschaften auf die darüber reflektierten Strahlenbündel aufweist; die zweite Messteilung 41 ist damit in diesem Ausführungsbeispiel demzufolge als Reflexions-Phasengitter ausgebildet.

Ebenfalls stationär gegenüber dem ersten Maßstab 30 ist im dargestellten Ausführungsbeispiel der erfindungsgemäßen Positionsmesseinrichtung noch eine Abtasteinheit 50 vorgesehen, in der eine Lichtquelle sowie eine Detektionseinheit angeordnet ist; letztere sind in den Figuren 2a und 2b nicht im Detail gezeigt. Es ist hierbei nicht zwingend erforderlich, dass die Lichtquelle und die Detektionseinheit unmittelbar in der Abtasteinheit 50 angeordnet sind. Es ist auch möglich, diese Komponenten räumlich entfernt von der Abtasteinheit 50 anzuordnen und die entsprechenden Strahlenbündel der Lichtquelle über Lichtwellenleiter der Abtasteinheit 50 zuzuführen bzw. über Lichtwellenleiter von der Abtasteinheit 50 der Detektionseinheit zuzuführen. Die Abtasteinheit 50 enthält in einer derartigen Ausführungsform als rein passive Baueinheit damit nur die entsprechenden Lichtwellenleiter, deren Aus- und Einkoppel-Flächen als Lichtquelle bzw. Detektionseinheit fungieren.

Gemäß dem in den Figuren 2a, 2b lediglich stark schematisiert angedeuteten Abtast-Strahlengang erfolgt am Auftreffpunkt P1 der ersten Messteilung 31 symmetrisch zur z-Richtung eine Aufspaltung des von der Lichtquelle bzw. von der Abtasteinheit 50 her einfallenden Strahlenbündels S in zwei Teilstrahlenbündel +/- 1. Beugungsordnung. Die beiden Teilstrahlenbündel treffen dann auf die Auftreffpunkte P2a.1, P2b.1 auf der zweiten Messteilung 31 und werden von dort derart gebeugt, dass sie jeweils antiparallel zu den einfallenden Teilstrahlenbündeln zurück in Richtung der ersten Messteilung 31 propagieren; wie oben erwähnt, ist beim vorliegenden Auflicht-System die dritte beaufschlagte Messteilung identisch mit der ersten Messteilung 31. Dort resultiert am Auftreffpunkt P3.1, der hier identisch mit dem ersten Auftreffpunkt P1 ist, die Wiedervereinigung der Teilstrahlenbündel. Anschließend propagiert ein resultierendes Signalstrahlenbündel SB mit mindestens einem Paar interferierender Teilstrahlenbündel zurück in Richtung der in der Abtasteinheit 50 angeordneten Detektionseinheit.

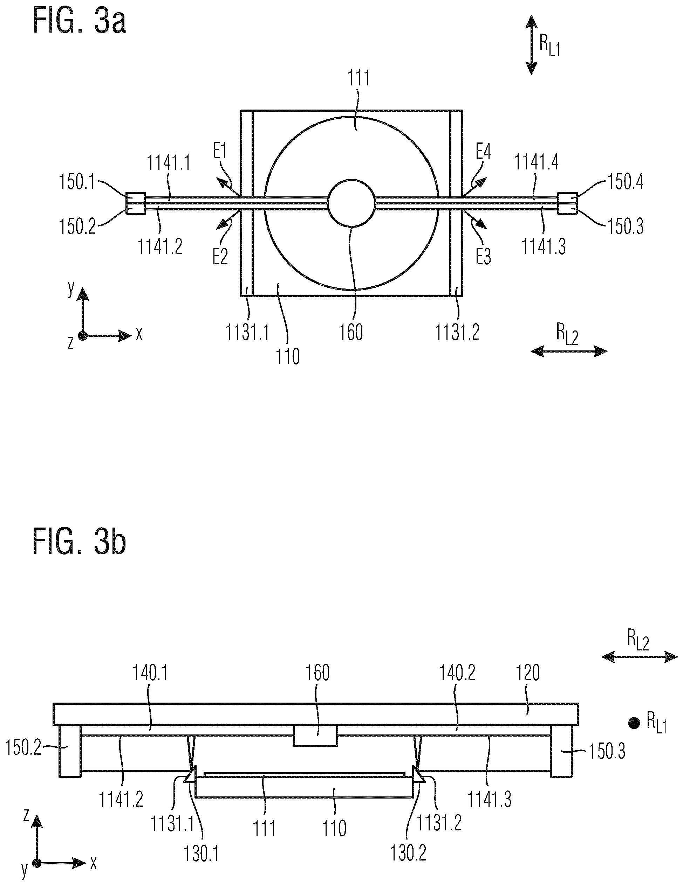

In den Figuren 3a und 3b ist stark schematisiert eine Anordnung dargestellt, die vier erfindungsgemäß ausgebildete Positionsmesseinrichtungen gemäß den Figuren 2a, 2b umfasst, welche zur Bestimmung der Position eines in der xy-Ebene beweglichen Objekts dient. Beim beweglichen Objekt kann es sich etwa um den Tisch 110 einer Halbleiter-Fertigungseinrichtung oder einer Halbleiter-Inspektionseinrichtung handeln, der relativ zu einem stationären Objekt in Form eines Maschinenrahmens 120 positioniert wird, an dem ein Werkzeug 160 angeordnet ist. Auf dem Tisch 110 befindet sich ein Wafer 111, der z.B. mit einem als Belichtungsobjektiv ausgebildeten Werkzeug 160 bearbeitet oder aber mit einem als Mikroskop ausgebildeten Werkzeug 160 untersucht wird. In der vorliegenden Anordnung lassen sich über die vier erfindungsgemäß ausgebildeten Positionsmesseinrichtungen Translationen des Tischs 110 entlang der Messrichtungen x, y sowie Rotationsbewegungen des Tischs 110 um die hierzu senkrechte z-Richtung messtechnisch erfassen.

Am Tisch 110 sind an zwei gegenüberliegenden Seiten jeweils erste Maßstäbe 130.1, 130.2 mit reflektiven ersten Messteilungen 1131.1, 1131.2 angeordnet, wobei die Maßstäbe 130.1, 130.2 um ihre jeweiligen Längserstreckungsrichtungen R_{L1} um ca. 45° verkippt sind. Die Verkippung der beiden ersten Maßstäbe 130.1, 130.2 erfolgt hierbei derart, dass eine Ablenkung der davon gebeugten Teilstrahlenbündel symmetrisch zur z-Richtung resultiert.

In Bezug auf die Anordnung der ersten Maßstäbe 130.1, 130.2 bzw. ersten Messteilungen 1131.1, 1131.2 entlang der z-Richtung ist weiterhin zu beachten, dass diese so am Tisch 110 platziert werden, dass die ersten Auftreffpunkte der verschiedenen Abtastungen der vier erfindungsgemäßen Positionsmesseinrichtungen auf Höhe des sich auf dem Tisch 110 befindlichen Wafers 111 liegen. Auf diese Art und Weise ist eine Positionsmessung in Bezug auf den Wafer 111 ohne resultierende Abbé-Fehler möglich.

Am stationären Objekt in Form des Maschinenrahmens 120 sind demgegenüber die beiden zweiten Maßstäbe 140.1, 140.2 mit jeweils zwei reflektiven zweiten Messteilungen sowie vier Abtasteinheiten 150.1 - 150.4 der vier erfindungsgemäßen Positionsmesseinrichtungen angeordnet.

Die auf den beiden zweiten Maßstäben 140.1, 140.2 jeweils in zwei parallelen Spuren angeordneten reflektiven zweiten Messteilungen sind jeweils als Lineargitter ausgebildet, die periodisch entlang der jeweiligen Längserstreckungsrichtung R_{L2} angeordnete Teilungsbereiche aufweisen. Die Gitterebenen der Lineargitter sind dabei parallel zur horizontalen Bewegungsebene des Tisches in der xy-Ebene angeordnet. Ebenfalls mit dem stationären Objekt bzw. Maschinenrahmen 120 ist das schematisch angedeutete Werkzeug 160 verbunden.

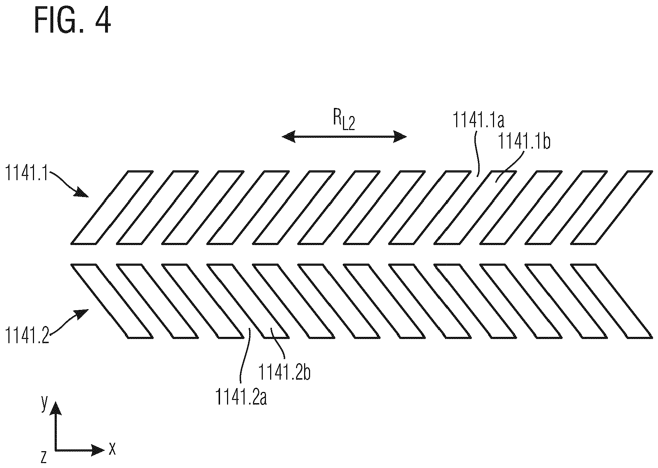

Eine Draufsicht auf einen der beiden zweiten Maßstäbe 140.1 mit den darauf in zwei parallelen Spuren angeordneten zweiten Messteilungen 1141.1, 1141.2, die als Lineargitter 141.1 ausgebildet ist, ist in Figur 4 gezeigt. Wie daraus ersichtlich, sind entlang der Längserstreckungsrichtung R_{L2} des zweiten Maßstabs in den beiden Spuren jeweils Messteilungsbereiche 1141.1a, 1141.1b bzw. 1141.2a, 1141.2b periodisch angeordnet, wobei im vorliegenden Beispiel die Längserstreckungsrichtung R_{L2} des zweiten Maßstabs mit der Messrichtung y zusammenfällt. Wie ferner aus Figur 4 ersichtlich, sind die Teilungsbereiche 1141.1a, 1141.1b bzw. 1141.2a, 1141.2 in den beiden Spuren V-förmig zueinander angeordnet, d.h. gegenüberliegende Teilungsbereiche 1141.1a, 1141.2a bzw. 1141.1b, 1141.2b aus den beiden Spuren nehmen jeweils einen Winkel +α bzw. -α gegenüber der Längserstreckungsrichtung R_{L2} ein. Die Messteilungsbereiche 1141.1a, 1141.1b bzw. 1141.2a, 1141.2b der zweiten Messteilungen 1141.1, 1141.2 weisen unterschiedliche Phasenhübe auf, d.h. die beiden zweiten Messteilungen 1141.1, 1141.2 sind als Reflexions-Phasengitter ausgebildet.

Die vier erfindungsgemäßen Positionsmesseinrichtungen besitzen in der dargestellten Anordnung jeweils Empfindlichkeitsvektoren E1 - E4 in der xy-Ebene auf, die in Figur 3a über die entsprechenden Pfeile angedeutet sind. Der Empfindlichkeitsvektor gibt dabei jeweils die Bewegungsrichtung an, in der sich das Positionssignal der jeweiligen Messrichtung x, y pro zurückgelegter Längeneinheit am schnellsten erhöht. Durch eine Verrechnung der beiden gewonnenen periodischen Abtastsignale pro Abtasteinheit kann die tatsächliche Bewegung in den gewünschten Messrichtungen x, y erhalten werden. In Bezug auf das Konzept des Empfindlichkeitsvektors in optischen Positionsmesseinrichtungen sei ergänzend z.B. auf die Druckschrift EP 2 857 901 A1 verwiesen.

Eine erste Positionsmesseinrichtung wird in der gezeigten Anordnung dabei durch die erste Abtasteinheit 150.1, den ersten Maßstab 130.1 mit der ersten Messteilung 1131.1 auf der linken Seite des Tischs 110 sowie den zweiten Maßstab 140.1 mit einer zweiten Messteilung 1141.1 auf der linken Tischseite gebildet, der zugehörige Empfindlichkeitsvektor ist in Figur 3a mit E1 bezeichnet. Eine zweite Positionsmesseinrichtung umfasst die zweite Abtasteinheit 150.2, den ersten Maßstab 130.1 mit der ersten Messteilung 1131.1 auf der linken Seite des Tischs 110 sowie den zweiten Maßstab 140.1 mit einer zweiten Messteilung 1141.2, der zugehörige Empfindlichkeitsvektor wird mit E2 bezeichnet. Die erste und zweite Positionsmesseinrichtung nutzen demzufolge die gleiche erste Messteilung 1131.1 auf dem ersten Maßstab 130.1.

Eine dritte Positionsmesseinrichtung wird durch die dritte Abtasteinheit 150.3, den ersten Maßstab 130.2 mit der ersten Messteilung 1131.2 auf der rechten Seite des Tischs 110 sowie den zweiten Maßstab 140.2 mit einer zweiten Messteilung 1141.3 gebildet, der zugehörige Empfindlichkeitsvektor ist in der Figur mit E3 angegeben. Eine vierte Positionsmesseinrichtung umfasst die vierte Abtasteinheit 150.4, den ersten Maßstab 130.2 mit der ersten Messteilung 1131.2 auf der rechten Seite des Tischs 110 sowie den zweiten Maßstab 140.2 mit einer weiteren zweiten Messteilung 1141.4, der zugehörige Empfindlichkeitsvektor wird mit E4 bezeichnet. Die dritte und vierte Positionsmesseinrichtung nutzen demnach die gleiche erste Messteilung 1131.2 auf dem ersten Maßstab 130.2

Die Empfindlichkeitsvektoren E1, E2 der ersten und zweiten Positionsmesseinrichtung sind gemäß Figur 3a ebenso orthogonal zueinander orientiert wie die Empfindlichkeitsvektoren E3, E4 der dritten und vierten Positionsmesseinrichtung. Gegenüber den Messrichtungen x, y nehmen die Empfindlichkeitsvektoren E1 - E4 der vier Positionsmesseinrichtungen in der xy-Ebene jeweils in einen 45°-Winkel ein.

Maßgeblich für die Vermeidung unerwünschter Messfehler in den einzelnen Positionsmesseinrichtungen ist wie bereits oben angedeutet die Ausbildung der jeweiligen ersten Messteilung in den entsprechenden erfindungsgemäßen optischen Positionsmesseinrichtungen. Wie ebenfalls bereits erwähnt, ist die erste Messteilung 31, 131.1 in den Ausführungsbeispielen der Figuren 2a, 2b bzw. 3a, 3b jeweils als reflektives Kreuzgitter in Form eines Reflexions-Phasengitters ausgeführt, das bestimmte Filtereigenschaften aufweist.

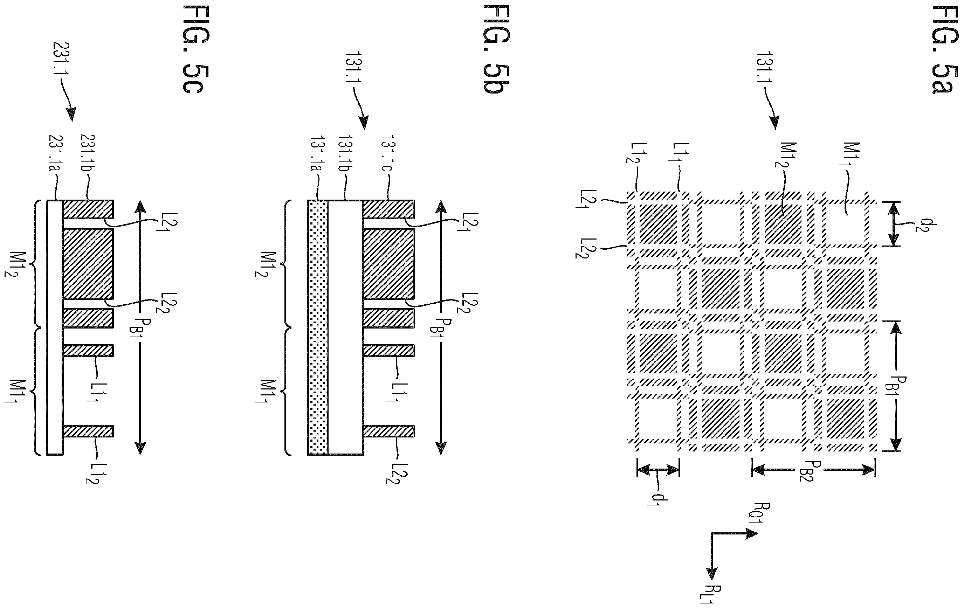

Eine erste Variante eines geeigneten Kreuzgitters 131.1 für die erste Messteilung ist teilweise in einer Draufsicht in Figur 5a sowie in einer Teil-Schnittansicht in Figuren 5b gezeigt. Anhand der Draufsicht in Figur 5a sei zunächst das zugrundeliegende Gitter-Design erläutert, bevor über die Teil-Schnittansicht ein möglicher Gitter-Aufbau der ersten Kreuzgitter-Variante beschrieben wird. Nachfolgend werden anhand der Teil-Schnittansichten in den Figuren 5c - 5e weitere Abwandlungen des Gitteraufbaus der ersten Kreuzgitter-Variante erläutert.

Wie aus Figur 5a ersichtlich, weist das als erste Messteilung genutzte Kreuzgitter 131.1 schachbrettförmig angeordnete erste und zweite flächige Messteilungsbereiche M1₁, M1₂ mit unterschiedlichen optischen Eigenschaften auf. Die ersten und zweiten flächigen Messteilungsbereiche M1₁, M1₂ sind entlang der Längs-Erstreckungsrichtung R_{L1} des Kreuzgitters 131.1 periodisch mit einer ersten Bereichs-Periodizität P_{B1} und entlang einer Quer-Erstreckungsrichtung R_{Q1} des Kreuzgitters 131.1, die orthogonal zur Längs-Erstreckungsrichtung R_{L1} orientiert ist, periodisch mit einer zweiten Bereichs-Periodizität P_{B2} angeordnet. Die in der Figur hell dargestellten ersten Messteilungsbereiche M1₁ üben dabei auf die reflektierten Strahlenbündel eine unterschiedliche phasenschiebende Wirkung auf als die schraffiert dargestellten zweiten Messteilungsbereiche M1₂, d.h. die Messteilungsbereiche M1₁ bzw. M1₂ weisen einen unterschiedlichen Phasenhub Δ1 bzw. Δ2 auf. Als unterschiedliche optische Eigenschaften der ersten und zweiten flächigen Messteilungsbereiche M1₁, M1₂ des Kreuzgitters 131.1 sind hier demzufolge unterschiedliche phasenschiebende Wirkungen vorgesehen.

Den ersten und zweiten flächigen Messteilungsbereichen M1₁, M1₂ des Kreuzgitters 131.1 ist in dieser Variante ein zweidimensionales, periodisches Liniengitter überlagert. Das entsprechende Liniengitter wiederum weist in jedem flächigen Messteilungsbereich M1₁, M1₂ jeweils einen Liniengitter-Bereich auf, der ein erstes und ein zweites Paar gerader Gitterlinien L1₁, L1₂ bzw. L2_{1,} L2₂ umfasst. Hierbei erstreckt sich das erste Paar von geraden Gitterlinien L1₁, L1₂ über die Gesamtlänge der flächigen Messteilungsbereiche M1₁, M1₂ und ist parallel zur Längs-Erstreckungsrichtung R_{L1} in einem ersten Abstand d₁ zwischen den Gitterlinien L1₁, L1₂ zueinander angeordnet. Das zweite Paar gerader Gitterlinien L2_{1,} L2₂ erstreckt sich ebenfalls über die Gesamtlänge der flächigen Messteilungsbereiche M1₁, M1₂ und ist parallel zur Quer-Erstreckungsrichtung R_{Q1} mit einem zweiten Abstand d₂ zwischen den Gitterlinien L2_{1,} L2₂ zueinander angeordnet. Das erste Paar Gitterlinien L1₁, L1₂ ist somit orthogonal zum zweiten Paar Gitterlinien L2_{1,} L2₂ angeordnet. Die Liniengitter-Bereiche besitzen entlang der Längs-Erstreckungsrichtung R_{L1} und der Quer-Erstreckungsrichtung R_{Q1} jeweils die identischen Periodizitäten P_{B1}, P_{B2} wie die flächigen Messteilungsbereiche M1₁, M1₂ des Kreuzgitters 131.1. Bei einer derartigen Kreuzgitter-Ausbildung liegen somit entlang der Längs-Erstreckungsrichtung R_{L1} und der Quer-Erstreckungsrichtung R_{Q1} jeweils mindestens drei voneinander durch die Gitterlinien L1₁, L1₂ bzw. L2₁, L2₂ separierte Bereiche in den einzelnen flächigen Messteilungsbereichen M1₁, M1₂ vor.

Das den flächigen Messteilungsbereichen M1₁, M1₂ des als erste Messteilung fungierenden Kreuzgitters 131.1 überlagerte Liniengitter stellt eine sogenannte Überstruktur dar, die maßgeblich für die gewünschte Unterdrückung der störenden höheren Beugungsordnungen ist. Unter anderem werden dabei die folgenden störenden Beugungsordnungen (mx, my) unterdrückt: (+/- 2, +/- 1), (+/- 1,+ 2), (+/- 3, 0), (0, +/-3). In einem Kreuzgitter, das lediglich aus den schachbrettartig angeordneten flächigen Messteilungsbereichen M1₁, M1₂ besteht, resultieren demgegenüber erheblich mehr höhere Beugungsordnungen, die zu Fehlern in der Positionsbestimmung führen.

Im Ausführungsbeispiel der Figur 5a ist das als erste Messteilung genutzte Kreuzgitter 131.1 als Binärgitter ausgebildet. Dies bedeutet, dass das Kreuzgitter 131.1 unterschiedliche Bereiche mit lediglich zwei unterschiedlichen optischen Eigenschaften aufweist; im erläuterten Beispiel sind dies die schraffierten und hellen Bereiche im Kreuzgitter 131.1 mit unterschiedlichen phasenschiebenden Wirkungen für die darüber reflektierten Strahlenbündel. Ein derartiges Binärgitter lässt sich über einen einzigen Lithographie-Prozess herstellen und ist daher vergleichsweise kostengünstig und einfach in der Herstellung.

Wie aus der Figur ersichtlich, besitzen die Gitterlinien L1₁, L1₂, L2_{1,} L2₂ des Liniengitters jeweils die andere bzw. komplementäre optische Eigenschaft gegenüber den optischen Eigenschaften der ersten und zweiten flächigen Messteilungsbereiche M1₁, M1₂. So weisen die Gitterlinien L1₁, L1₂, L2_{1,} L2₂ in einem hell dargestellten, flächigen ersten Messteilungsbereich M1₁ mit dem Phasenhub Δ1 etwa den komplementären Phasenhub Δ2 auf und in den schraffiert dargestellten, flächigen zweiten Messteilungsbereichen M1₂ mit dem Phasenhub Δ2 den komplementären Phasenhub Δ1.

In einer alternativen Variante des filternden Kreuzgitters 131.1 zum Beispiel aus Figur 5a kann vorgesehen sein, dass das überlagerte periodische Liniengitter nicht zweidimensional, sondern eindimensional ausgebildet ist. Das bedeutet, dass z.B. lediglich ein Liniengitter mit den Gitterlinien L2₁ und L2₂ vorgesehen ist, die entlang einer ersten Erstreckungsrichtung, z.B. der Längs-Erstreckungsrichtung R_{L1}, angeordnet werden. Es liegen dann nur entlang der ersten Erstreckungsrichtung jeweils mindestens drei voneinander durch die Gitterlinien L2₁, L2₂ separierte Bereiche in den einzelnen flächigen Messteilungsbereichen M1₁, M1₂ vor. Die in Figur 5a vorgesehenen Gitterlinien L1₁ und L1₂ entlang einer zweiten Erstreckungsrichtung, nämlich der Quer-Erstreckungsrichtung R_{Q1}, entfallen in einer solchen Variante. Die erste und zweite Erstreckungsrichtung sind senkrecht zueinander orientiert und entsprechen im vorliegenden Beispiel der Längs-Erstreckungsrichtung R_{L1} und der Quer-Erstreckungsrichtung R_{Q1}. Alternativ wäre grundsätzlich auch möglich, lediglich entlang der zweiten Erstreckungsrichtung, also entlang der Quer-Erstreckungsrichtung R_{Q1} ein eindimensionales Liniengitter anzuordnen.

In Figur 5b ist das filternde Kreuzgitter 131.1 aus Figur 5a in einer Teil-Schnittansicht dargestellt, anhand der der Schichtaufbau dieses Beispiels nachfolgend erläutert wird. Gezeigt ist in der Figur wie auch in den folgenden Darstellungen jeweils eine Schnittansicht innerhalb einer ersten Bereichs-Periode P_{B1} mit zwei benachbarten ersten und zweiten flächigen Messteilungsbereichen M1₁, M1₂. Das vorliegende Kreuzgitter 131.1 weist eine ganzflächig durchgehende Reflektorschicht 131.1a auf, die sich über die gesamte Kreuzgitter-Fläche erstreckt und z.B. aus Aluminium (Al) oder Chrom (Cr) besteht. Darüber ist ebenfalls ganzflächig und durchgehend eine Dielektrikums-Schicht 131.1b angeordnet, für die z.B. Siliziumdioxid (SiO₂) in Betracht kommt. Oberhalb der Dielektrikums-Schicht 131.1b ist eine Strukturierungsschicht 131.1c angeordnet, die in den schraffiert dargestellten Bereichen ein geeignetes Reflektormaterial aufweist. Als Reflektormaterial können etwa hochbrechende dielektrische Materialien, Halbleiter-Materialien wie Silizium (Si), Germanium (Ge) oder aber Metalle wie Gold (Au), Silber (Ag) oder Aluminium (Al) verwendet werden.

Ein abgewandelter Schicht-Aufbau für ein filterndes Kreuzgitter 231.1, wiederum ausgebildet als Binärgitter, ist in einer Teil-Schnittansicht in Figur 5c gezeigt. Hier ist unmittelbar auf einem Substrat 231.1a, das z.B. aus Quarzglas oder Zerodur besteht, eine Strukturierungsschicht 231.1b angeordnet, welche in den schraffiert dargestellten Bereichen ein geeignetes Reflektormaterial aufweist. Als Reflektormaterial können auch hier hochbrechende dielektrische Materialien, Halbleiter-Materialien wie Silizium (Si), Germanium (Ge) oder aber Metalle wie Gold (Au), Silber (Ag) oder Aluminium (Al) verwendet werden.

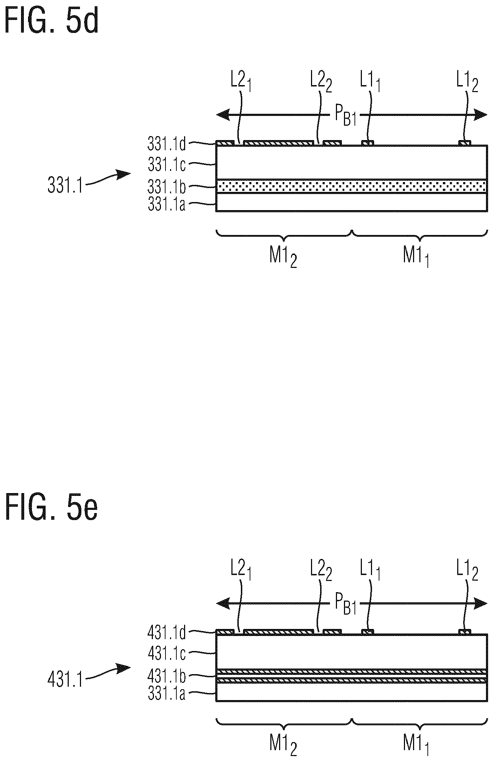

Eine weitere Abwandlung für ein filterndes Kreuzgitter 331.1 ist in Figur 5d in einer Teil-Schnittansicht dargestellt. Auf einem Substrat 331.1a, z.B. aus Quarzglas oder Zerodur, ist ganzflächig eine durchgehende metallische Reflektorschicht 331.1b angeordnet, die sich über die gesamte Kreuzgitter-Fläche erstreckt; die Reflektorschicht 331.1b kann z.B. Aluminium (Al) oder Gold (Au) bestehen. Darüber ist ebenfalls ganzflächig und durchgehend eine Dielektrikums-Schicht 331.1c vorgesehen, z.B. aus Siliziumdioxid (SiO₂). Oberhalb davon ist eine Strukturierungsschicht 331.1d angeordnet, bei der in den schraffiert dargestellten Bereichen wiederum ein geeignetes Reflektormaterial angeordnet ist, beispielsweise Gold (Au), Silizium (Si), Tantalpentoxid (TaOs) oder Siliziumnitrid (Si₃N₄).

Ein nochmals abgewandelter Schichtaufbau für ein geeignetes filterndes Kreuzgitter 431.1 ist in Figur 5e in einer Teil-Schnittansicht gezeigt. Im Unterschied zum Beispiel aus Figur 5d ist hier anstelle der auf dem Substrat 431.1a vorgesehenen Reflektorschicht eine ganzflächige dielektrische Spiegelschicht 431.1b vorgesehen, die aus einem Schichtstapel mit mehreren dielektrischen Einzelschichten besteht; für die Einzelschichten können dabei etwa hochbrechende Materialien wie Titandioxid (TiO₂), Tantalpentoxid (TaOs) und niedrigbrechendes Material wie Siliziumdioxid (SiO₂) vorgesehen sein, die alternierend angeordnet werden. Darüber ist wie im vorhergehenden Beispiel eine Dielektrikums-Schicht 431.1c sowie eine Strukturierungsschicht 431.1d angeordnet. Als Material für die Dielektrikums-Schicht 431.1c kommt z.B. Siliziumdioxid (SiO₂) in Betracht, für die Strukturierungsschicht kann Titandioxid (TiO₂), Silizium oder Tantalpentoxid (TaOs) verwendet werden.

Eine zweite Variante geeigneter Kreuzgitter 531.1 für die erste Messteilung ist in der Draufsicht in Figur 6a sowie in einer Teil-Schnittansicht in Figur 6b dargestellt. Anhand der Draufsicht in Figur 6a sei zunächst wiederum das grundsätzliche Gitter-Design erläutert, bevor über die Teil-Schnittansicht in Figur 6b der Gitter-Aufbau beschrieben wird. Hierbei werden im Folgenden i.w. nur die maßgeblichen Unterschiede zur ersten Kreuzgitter-Variante aus Figur 5a erläutert.

Grundsätzlich weist auch diese Variante eines als erste Messteilung nutzbaren, filternden Kreuzgitters 531.1 wiederum schachbrettartig angeordnete erste und zweite flächige Messteilungsbereiche M1₁, M1₂ mit zwei unterschiedlichen optischen Eigenschaften auf; diesen ist wie im Beispiel der Figur 5a ebenfalls ein zweidimensionales Liniengitter mit den Gitterlinien L1₁, L1₂, L2_{1,} L2₂ überlagert. Zwischen den ersten und zweiten flächigen Messteilungsbereichen M1₁, M1₂ sind in diesem Kreuzgitter 531.1 jedoch noch zusätzliche Abstandsbereiche M1₃ vorgesehen, die eine dritte optische Eigenschaft besitzen, die sich von den optischen Eigenschaften der ersten und zweiten flächigen Messteilungsbereiche M1₁, M1₂ in der Reflektivität und/oder im Phasenhub unterscheidet. Wenn demzufolge die ersten und zweiten flächigen Messteilungsbereiche M1₁, M1₂ unterschiedliche phasenschiebende Wirkungen mit den Phasenhüben Δ1, Δ2 besitzen, so weisen die Abstandsbereiche M1₃ einen Phasenhub Δ3 auf, der sich von den Phasenhüben Δ1, Δ2 unterscheidet; desweiteren kann vorgesehen sein, dass die Abstandsbereiche M1₃ absorbierend ausgebildet sein, also eine Reflektivität R = 0 besitzen. Wie aus Figur 6a ersichtlich, haben die Abstandsbereiche M1₃ zwischen den ersten und zweiten flächigen Messteilungsbereichen M1₁, M1₂ entlang der Längs-Erstreckungsrichtung R_{L1} und der Quer-Erstreckungsrichtung R_{Q1} jeweils eine identische Breite P_{A1}, P_{A2}.

In Figur 6b ist das filternde Kreuzgitter 531.1 aus Figur 6a analog zum vorherigen Beispiel in einer Teil-Schnittansicht dargestellt, anhand der der Schichtaufbau nachfolgend erläutert wird. Auf einem Substrat 531.1a, z.B. aus Zerodur, ist eine strukturierte Reflektorschicht 531.1b angeordnet, die beispielsweise aus Chrom (Cr), Aluminium (Al) oder Gold (Au) besteht. Auf den mit der Reflektorschicht 531.1b belegten Bereichen auf dem Substrat 531.1a ist in den zweiten flächigen Messteilungsbereichen M1₂ noch eine Dielektrikums-Schicht 531.1c vorgesehen; als Material hierfür kommt z.B. Siliziumdioxid (SiO₂), Tantalpentoxid (TaOs) oder Titandioxid (TiO₂) in Betracht.

Die in den Figuren 6a und 6b dargestellte Kreuzgitter-Variante ist demzufolge nicht als Binärgitter ausgebildet, sondern als sogenanntes gemischtes Amplituden-/Phasengitter. Dieses erfordert einen etwas höheren fertigungstechnischen Aufwand im Hinblick auf die Zahl erforderlicher Lithographie-Schritte gegenüber der ersten beschriebenen Kreuzgitter-Variante. Es bietet jedoch die Möglichkeit, unerwünschte höhere Beugungsordnungen besonders effizient zu unterdrücken.

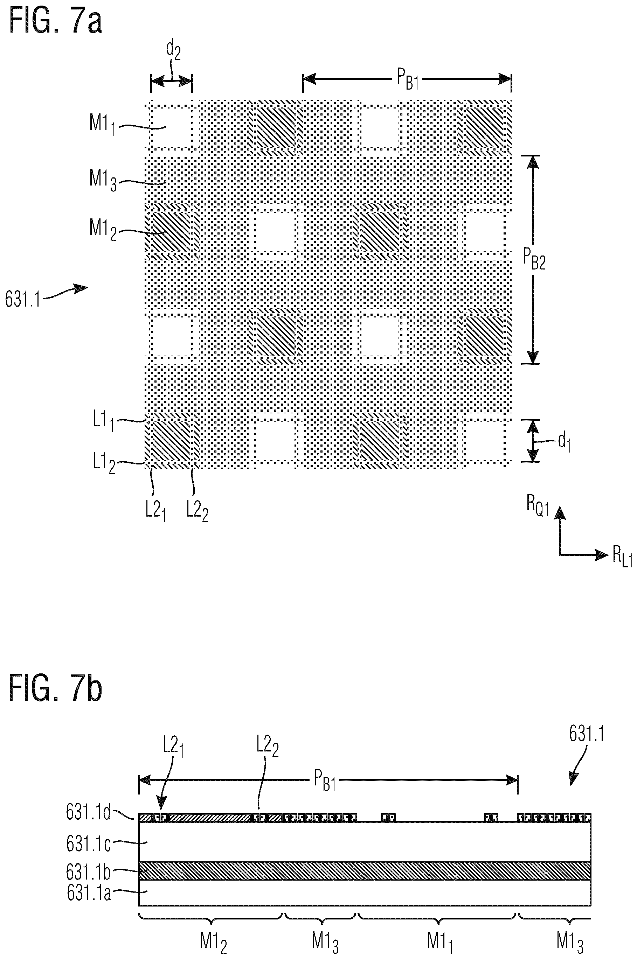

Eine dritte Variante eines geeigneten filternden Kreuzgitters 631.1 für die erste Messteilung ist in einer Draufsicht in Figur 7a sowie in einer Teil-Schnittansicht in Figur 7b dargestellt. Anhand der Draufsicht in Figur 7a wird nachfolgend zunächst das grundsätzliche Gitter-Design erläutert, anhand von Figur 7b der Gitter-Aufbau.

Auch diese Variante des Kreuzgitters 631.1 umfasst wieder schachbrettartig angeordnete erste und zweite flächige Messteilungsbereiche M1₁, M1₂ mit zwei unterschiedlichen optischen Eigenschaften. Diesen ist wie im Beispiel der Figur 5a ebenfalls ein zweidimensionales Liniengitter mit den Gitterlinien L1₁, L1₂, L2_{1,} L2₂ überlagert. Zwischen den ersten und zweiten flächigen Messteilungsbereichen M1₁, M1₂ sind in diesem Kreuzgitter analog zum vorhergehenden Beispiel noch zusätzliche Abstandsbereiche M1₃ vorgesehen, die eine dritte optische Eigenschaft besitzen, die sich von den optischen Eigenschaften der ersten und zweiten flächigen Messteilungsbereiche M1₁, M1₂ unterscheidet. Die Abstandsbereiche M1₃ zwischen den ersten und zweiten flächigen Messteilungsbereichen M1₁, M1₂ sind im Unterschied zur Kreuzgitter-Variante aus den Figuren 6a, 6b jedoch strukturiert ausgebildet. Wie aus Figur 7a ersichtlich, ist dort z.B. eine Kreuzgitter-Substruktur vorgesehen, die aus periodisch entlang der Längs- und Quer-Erstreckungsrichtung R_{L1}, R_{Q1} angeordneten quadratischen Gitterbereichen mit unterschiedlichen optischen Eigenschaften besteht.

Alternativ zur Kreuzgitter-Substruktur gemäß Figur 7a könnten in den in den Abstandsbereichen M1₃ auch andere Strukturierungsvarianten vorgesehen sein. So wäre es auch möglich, dort sog. Hochfrequenz-Gitter mit sehr kleinen Gitterperioden auszubilden, die in den Abstandsbereichen M1₃ eine Reflektivität R = 0 aufweisen. Ebenso könnten dort Beugungsgitter mit nur schwacher 0. Beugungsordnungen angeordnet werden, so dass auch darüber in den Abstandsbereichen M1₃ eine Reflektivität R = 0 resultiert.

Figur 7b zeigt das filternde Kreuzgitter 631.1 aus Figur 7a analog zu den vorherigen Beispielen in einer Teil-Schnittansicht, anhand der ein möglicher Schichtaufbau dieser Variante nachfolgend erläutert wird. Auf einem Substrat 631.1a beispielsweise aus Zerodur oder Quarzglas ist eine ganzflächige Reflektorschicht 631.1b angeordnet; diese kann aus Chrom (Cr), Aluminium (Al) oder Gold (Au) bestehen. Darüber ist eine ganzflächige Dielektrikums-Schicht 631.1c z.B. aus Siliziumdioxid (SiO₂), vorgesehen. Über dieser ist die Strukturierungsschicht 631.1d angeordnet; hierfür kann Titandioxid (TiO₂), Silizium, Silizium-Nitrid (Si₃N₄), Chrom (Cr) oder Aluminium (Al) verwendet werden.

Neben den erläuterten Ausführungsbeispielen gibt es selbstverständlich noch weitere Möglichkeiten zur alternativen Ausbildung der erfindungsgemäßen optischen Positionsmesseinrichtung.

So ist es auch möglich, die erste Messteilung nicht wie in den erläuterten Beispielen als Reflexions-Gitter, sondern als Transmissions-Gitter in Form eines Amplitudengitters auszuführen. In einem derartigen Transmissions-Amplitudengitter weisen die verschiedenen Gitterbereiche dann unterschiedliche Transmissionseigenschaften für die durchtretenden Strahlenbündel auf.

Darüber hinaus kann nicht nur die erste Messteilung die oben erläuterten Filtereigenschaften bezüglich störender höherer Beugungsordnung aufweisen. Es ist auch möglich, dass alternativ oder zusätzlich auch die zweite Messteilung als Filtergitter und dabei insbesondere als filterndes Kreuzgitter ausgebildet wird.

Auch der zweite Maßstab mit der zweiten Messteilung kann in weiteren Ausführungsbeispielen der erfindungsgemäßen Positionsmesseinrichtung um seine Längserstreckungsrichtung verkippt angeordnet werden.

Schließlich ist es auch möglich, dass mindestens eine der verwendeten Messteilungen in der erfindungsgemäßen Positionsmesseinrichtung als sogenanntes Polarisationsgitter ausgebildet ist. Bei einem derartigen Polarisationsgitter besitzen die resultierenden Beugungsordnungen jeweils eine definierte Polarisation; so können etwa resultierende +/- 1. Beugungsordnungen orthogonal zueinander polarisiert sein usw.. Im Hinblick auf derartige Polarisationsgitter sei z.B. auf die EP 3 739 300 A1 verwiesen.

## Patentansprüche

1. Optische Positionsmesseinrichtung zur Erfassung der Relativposition mindestens zweier Maßstäbe (30, 40; 130.1, 130.2; 140.1, 140.2), die entlang zweier Messrichtungen (x, y) zueinander beweglich sowie in unterschiedlichen Ebenen und gekreuzt zueinander angeordnet sind, wobei
- die optische Positionsmesseinrichtung mindestens zwei Maßstäbe (30, 40; 130.1, 130.2; 140.1, 140.2), eine Lichtquelle (LQ) und eine Detektionseinheit (DET) aufweist,
- die beiden Maßstäbe (30, 40; 130.1, 130.2; 140.1, 140.2) jeweils mindestens eine Messteilung (G1, G2, G3; 31, 41; 1131.1, 1131.2, 1141.1, 1141.2) mit periodisch entlang mindestens einer Messrichtung (x, y) angeordneten Gitterbereichen mit unterschiedlichen optischen Eigenschaften aufweisen und die Längserstreckungsrichtungen (R_{L1}, R_{L2}) der Maßstäbe (30, 40; 130.1, 130.2; 140.1, 140.2) jeweils parallel zu einer ersten oder zweiten Messrichtung (x, y) orientiert sind, und
- wobei die mindestens zwei Maßstäbe (30, 40; 130.1, 130.2; 140.1, 140.2) so eingerichtet sind, dass
- am ersten Maßstab (30; 130.1; 140.1) eine Aufspaltung eines von der Lichtquelle (LQ) emittierten Beleuchtungsstrahlenbündels (S) in mindestens zwei Teilstrahlenbündel (S1, S2) erfolgt, und
- die Teilstrahlenbündel (S1, S2) nachfolgend den zweiten Maßstab (40; 130.2; 140.2) beaufschlagen und eine Rückreflexion in Richtung des ersten Maßstabs (30; 130.1; 140.1) erfahren, und
- die zurückreflektierten Teilstrahlenbündel (S1, S2) erneut auf dem ersten Maßstab (30; 130.1; 140.1) auftreffen und dort wiedervereinigt werden, so dass anschließend mindestens ein resultierendes Signalstrahlenbündel (SB) in Richtung der Detektionseinheit (DET) propagiert, über die ein oder mehrere positionsabhängige Abtastsignale bezüglich der Relativbewegung der Maßstäbe (30, 40; 130.1, 130.2; 140.1, 140.2) entlang der ersten oder zweiten Messrichtung (x, y) erzeugbar sind,
wobei die Messteilung (G1, G2, G3; 31, 41; 1131.1, 1131.2, 1141.1, 1141.2) mindestens eines Maßstabs (30, 40; 130.1, 130.2; 140.1, 140.2) als zweidimensionales Kreuzgitter (131.1; 231.1, 331.1; 431.1; 531.1; 631.1) ausgebildet ist,
**dadurch gekennzeichnet,**
- **dass** das Kreuzgitter (131.1; 231.1, 331.1; 431.1; 531.1; 631.1) eine Filterwirkung dergestalt besitzt, dass am Kreuzgitter (131.1; 231.1, 331.1; 431.1; 531.1; 631.1) störende höhere Beugungsordnungen unterdrückt werden,
- wobei das Kreuzgitter (131.1; 231.1; 331.1; 431.1; 531.1; 631.1) schachbrettartig angeordnete erste und zweite flächige Messteilungsbereiche (M1₁, M1₂) mit unterschiedlichen optischen Eigenschaften aufweist, die entlang der Längs-Erstreckungsrichtung (R_{L1}) periodisch mit einer ersten Bereichs-Periodizität (P_{B1}) und entlang einer Quer-Erstreckungsrichtung (R_{Q1}) des Kreuzgitters (131.1; 231.1; 331.1; 431.1; 531.1; 631.1), die orthogonal zur Längs-Erstreckungsrichtung (R_{L1}) orientiert ist, periodisch mit einer zweiten Bereichs-Periodizität (P_{B2}) schachbrettförmig angeordnet sind, wobei den ersten und zweiten flächigen Messteilungsbereichen (M1₁, M1₂) ein eindimensionales oder zweidimensionales, periodisches Liniengitter überlagert ist.

2. Optische Positionsmesseinrichtung nach Anspruch 1, **dadurch gekennzeichnet, dass** das Liniengitter in jedem flächigen Messteilungsbereich (M1₁, M1₂) jeweils einen Liniengitter-Bereich aufweist, der
- mindestens ein erstes Paar von geraden Gitterlinien (L1₁, L1₂; L2_{1,} L2₂) umfasst, die sich über die Gesamtlänge des flächigen Messteilungsbereichs (M1₁, M1₂) erstrecken und parallel zu einer ersten Erstreckungsrichtung (R_{L1}; R_{Q1}) in einem ersten Abstand (d₁; d₂) zueinander angeordnet sind, und
- im Fall eines zweidimensionalen Liniengitters ferner ein zweites Paar von geraden Gitterlinien (L2₁, L2₂; L1₁, L1₂) umfasst, die sich über die Gesamtlänge des flächigen Messteilungsbereichs (M1₁, M1₂) erstrecken und entlang einer zweiten Erstreckungsrichtung (R_{L1}; R_{Q1}), die senkrecht zur ersten Erstreckungsrichtung (R_{Q1}; R_{L1}) orientiert ist, in einem zweiten Abstand (d₂; d₁) zueinander angeordnet sind, und
- wobei die Liniengitter-Bereiche entlang der ersten Erstreckungsrichtung (R_{L1}; R_{Q1}) die identischen Periodizitäten besitzen wie die flächigen Messteilungsbereiche (M1₁, M1₂) des Kreuzgitters (131.1; 231.1; 331.1; 431.1; 531.1; 631.1), und
- wobei im Fall eines zweidimensionalen Liniengitters die Liniengitter-Bereiche entlang der zweiten Erstreckungsrichtung (R_{Q1}; R_{L1}) ebenfalls die identischen Periodizitäten besitzen wie die flächigen Messteilungsbereiche (M1₁, M1₂) des Kreuzgitters (131.1; 231.1; 331.1; 431.1; 531.1; 631.1).

3. Optische Positionsmesseinrichtung nach Anspruch 2, **dadurch gekennzeichnet, dass** entlang der ersten Erstreckungsrichtung (R_{L1}; R_{Q1}) und/oder der zweiten Erstreckungsrichtung (R_{Q1}; R_{L1}) jeweils mindestens drei voneinander durch die Gitterlinien (L1₁, L1₂, L2_{1,} L2₂) separierte Bereiche in den flächigen Messteilungsbereichen (M1₁, M1₂) vorliegen.

4. Optische Positionsmesseinrichtung nach Anspruch 1, **dadurch gekennzeichnet, dass** als unterschiedliche optische Eigenschaften im Kreuzgitter (131.1; 231.1; 331.1; 431.1; 531.1; 631.1)
- unterschiedliche Transmissionseigenschaften, und/oder
- unterschiedliche Reflexionseigenschaften, und/oder
- unterschiedliche phasenschiebende Wirkungen
vorgesehen sind.

5. Optische Positionsmesseinrichtung nach mindestens einem der Ansprüche 2 - 4, **dadurch gekennzeichnet, dass** das Kreuzgitter (131.1; 231.1; 331.1; 431.1) als Binärgitter mit zwei unterschiedlichen optischen Eigenschaften ausgebildet ist und die Gitterlinien (L1₁, L1₂, L2_{1,} L2₂) des Liniengitters jeweils die andere optische Eigenschaft gegenüber den optischen Eigenschaften der ersten und zweiten flächigen Messteilungsbereiche (M1₁, M1₂) aufweisen.

6. Optische Positionsmesseinrichtung nach mindestens einem der Ansprüche 1 - 4, **dadurch gekennzeichnet, dass** das Kreuzgitter (531.1; 631.1) zwischen den ersten und zweiten flächigen Messteilungsbereichen (M1₁, M1₂) Abstandsbereiche (M1₃) aufweist, die eine dritte optische Eigenschaft besitzen, die sich von den optischen Eigenschaften der ersten und zweiten flächigen Messteilungsbereiche (M1₁, M1₂) unterscheidet.

7. Optische Positionsmesseinrichtung nach Anspruch 6, **dadurch gekennzeichnet, dass** die Abstandsbereiche (M1₃) zwischen den ersten und zweiten flächigen Messteilungsbereichen (M1₁, M1₂) entlang der Längs-Erstreckungsrichtung (R_{L1}) und der Quer-Erstreckungsrichtung (R_{Q1}) jeweils eine identische Breite (P_{A1}, P_{A2}) aufweisen.

8. Optische Positionsmesseinrichtung nach Anspruch 6, **dadurch gekennzeichnet, dass** die Abstandsbereiche (M1₃) strukturiert ausgebildet sind.

9. Optische Positionsmesseinrichtung nach mindestens einem der vorhergehenden Ansprüche, **dadurch gekennzeichnet, dass** die Messteilung (41; 1141.1, 1141.2) des zweiten Maßstabs (40; 140.1, 140.2) als reflektives Lineargitter (141.1) ausgebildet ist, das entlang der Längserstreckungsrichtung (R_{L2}) des zweiten Maßstabs (40; 140.1, 140.2) periodisch angeordnete Messteilungsbereiche (141.1a, 141.1b) mit unterschiedlichen phasenschiebenden Wirkungen auf die darüber reflektierten Strahlenbündel aufweist.

10. Optische Positionsmesseinrichtung nach Anspruch 9, **dadurch gekennzeichnet, dass** das Lineargitter (141.1) des zweiten Maßstabs (40; 140.1, 140.2) eine Filterwirkung dergestalt besitzt, dass bestimmte Beugungsordnungen n > 1 unterdrückt werden.

11. Optische Positionsmesseinrichtung nach mindestens einem der vorhergehenden Ansprüche, **dadurch gekennzeichnet, dass** mindestens eine der Messteilungen (G1, G2, G3; 31, 41; 1131.1, 1131.2, 1141.1, 1141.2) desweiteren derart ausgebildet ist, dass die darüber resultierenden Beugungsordnungen jeweils eine definierte Polarisation besitzen.

12. Optische Positionsmesseinrichtung nach mindestens einem der vorhergehenden Ansprüche, **dadurch gekennzeichnet, dass** mindestens einer der Maßstäbe (30, 40; 130.1, 130.2, 140.1, 140.2) um seine Längserstreckungsrichtung (R_{L1}, R_{L2}) verkippt angeordnet ist.

13. Anordnung mit einem Tisch sowie mehreren optischen Positionsmesseinrichtungen nach mindestens einem der vorhergehenden Ansprüche, **dadurch gekennzeichnet, dass**
- der Tisch (110) in einer horizontalen Bewegungsebene entlang zweier orthogonaler Messrichtungen (x, y) beweglich angeordnet ist, und
- an gegenüberliegenden Seiten des Tisches (110) zwei erste Maßstäbe (130.1, 130.2) angeordnet sind, und
- mindestens ein zweiter Maßstab (140.1, 140.2) unter einem Winkel von 90° gekreuzt sowie stationär gegenüber den beiden ersten Maßstäben (130.1, 130.2) in einer Ebene angeordnet ist, die entlang einer Richtung (z) beabstandet von der horizontalen Bewegungsebene ist, wobei diese Richtung (z) orthogonal zur Bewegungsebene orientiert ist, und
- benachbart zu den gegenüberliegenden Seiten des Tisches (110) mit den ersten Maßstäben (130.1, 130.2) mehrere Abtasteinheiten (150.1 - 150.4) stationär angeordnet ist, die jeweils eine Lichtquelle sowie eine Detektionseinheit umfassen.

14. Anordnung nach Anspruch 13, **dadurch gekennzeichnet, dass**
- die beiden ersten Maßstäbe (130.1, 130.2) jeweils eine reflektive Messteilung (1131.1, 1131.2) in Form eines zweidimensionalen Kreuzgitters (131.1; 231.1; 331.1; 431.1; 531.1; 631.1) aufweisen, die gegenüber der horizontalen Bewegungsebene um ihre Längserstreckungsrichtung (R_{L1}) verkippt angeordnet sind, und
- der zweite Maßstab (140.1, 140.2) mindestens zwei reflektive Messteilungen (1141.1, 1141.2, 1141.3, 1141.4) in zwei parallelen Spuren aufweist, die sich parallel zur Längserstreckungsrichtung (R_{L2}) erstrecken, wobei die Messteilungen (1141.1, 1141.2, 1141.3, 1141.4) jeweils als reflektive Lineargitter ausgebildet sind, die periodisch entlang der jeweiligen Längserstreckungsrichtung (R_{L2}) angeordnete Teilungsbereiche (1141.1a, 1141.1b, 1141.2a, 1141.2b) aufweisen und wobei die Gitterebenen der reflektiven Messteilungen (1141.1, 1141.2, 1141.3, 1141.4) parallel zur horizontalen Bewegungsebene orientiert sind.

## Claims

1. Optical position measuring device for recording the relative position of at least two scales (30, 40; 130.1, 130.2; 140.1, 140.2) which are movable relative to one another along two measurement directions (x, y) and are arranged in different planes and crossed relative to each other, wherein
- the optical position measuring device comprises at least two scales (30, 40; 130.1, 130.2; 140.1, 140.2), a light source (LQ) and a detection unit (DET),
- the two scales (30, 40; 130.1, 130.2; 140.1, 140.2) each comprise at least one measurement graduation (G1, G2, G3; 31, 41; 1131.1, 1131.2, 1141.1, 1141.2) with grating regions that have different optical properties arranged periodically along at least one measurement direction (x, y) and the directions of longitudinal extent (R_{L1}, R_{L2}) of the scales (30, 40; 130.1, 130.2; 140.1, 140.2) are each oriented parallel to a first or second measurement direction (x, y), and
- wherein the at least two scales (30, 40; 130.1, 130.2; 140.1, 140.2) are configured such that
- an illumination beam (S) emitted by the light source (LQ) is split into at least two component beams (S1, S2) at the first scale (30; 130.1; 140.1) and
- the component beams (S1, S2) subsequently impinge upon the second scale (40; 130.2; 140.2) and experience a reflection back in the direction of the first scale (30; 130.1; 140.1) and
- the back-reflected component beams (S1, S2) are incident on the first scale (30; 130.1; 140.1) again and recombined there such that at least one resultant signal beam (SB) subsequently propagates in the direction of the detection unit (DET), by means of which one or more position-dependent sensing signals are generable in respect of the relative motion of the scales (30, 40; 130.1, 130.2; 140.1, 140.2) along the first or second measurement direction (x, y),
wherein the measurement graduation (G1, G2, G3; 31, 41; 1131.1, 1131.2, 1141.1, 1141.2) of at least one scale (30, 40; 130.1, 130.2; 140.1, 140.2) is in the form of a two-dimensional cross grating (131.1; 231.1, 331.1; 431.1; 531.1; 631.1),
**characterized**
- **in that** the cross grating (131.1; 231.1, 331.1; 431.1; 531.1; 631.1) has such a filter effect that interfering higher orders of diffraction are suppressed at the cross grating (131.1; 231.1, 331.1; 431.1; 531.1; 631.1),
- wherein the cross grating (131.1; 231.1; 331.1; 431.1; 531.1; 631.1) has first and second areal measurement graduation regions (M1₁, M1₂) with different optical properties arranged in chequerboard fashion, the said measurement graduation regions being arranged in chequerboard fashion, periodically with a first region periodicity (P_{B1}) along the longitudinal direction of extent (R_{L1}) and periodically with a second region periodicity (P_{B2}) along a transverse direction of extent (R_{Q1}) of the cross grating (131.1; 231.1; 331.1; 431.1; 531.1; 631.1) oriented orthogonally to the longitudinal direction of extent (R_{L1}), wherein a one-dimensional or two-dimensional, periodic line grating is overlaid on the first and second areal measurement graduation regions (M1₁, M1₂).

2. Optical position measuring device according to Claim 1, **characterized in that** the line grating has a respective line grating region in each areal measurement graduation region (M1₁, M1₂), the said line grating region
- comprising at least one first pair of straight grating lines (L1₁, L1₂; L2_{1,} L2₂) which extend over the entire length of the areal measurement graduation region (M1₁, M1₂) and are arranged at a first distance (d₁; d₂) from one another parallel to a first direction of extent (R_{L1}; R_{Q1}), and
- in the case of a two-dimensional line grating further comprising a second pair of straight grating lines (L2₁, L2₂; L1₁, L1₂) which extend over the entire length of the areal measurement graduation region (M1₁, M1₂) and are arranged at a second distance (d₂; d₁) from one another along a second direction of extent (R_{L1}; R_{Q1}) which is oriented perpendicularly to the first direction of extent (R_{Q1}; R_{L1}), and
- wherein the line grating regions along the first direction of extent (R_{L1}; R_{Q1})have identical periodicities to the areal measurement graduation regions (M1₁, M1₂) of the cross grating (131.1; 231.1; 331.1; 431.1; 531.1; 631.1), and
- wherein in the case of a two-dimensional line grating the line grating regions along the second direction of extent (R_{Q1}; R_{L1}) also have identical periodicities to the areal measurement graduation regions (M1₁, M1₂) of the cross grating (131.1; 231.1; 331.1; 431.1; 531.1; 631.1).

3. Optical position measuring device according to Claim 2, **characterized in that**, along the first direction of extent (R_{L1}; R_{Q1})and/or the second direction of extent (R_{Q1}; R_{L1}), at least three regions separated from one another by the grating lines (L1₁, L1₂, L2_{1,} L2₂) are present in each case in the areal measurement graduation regions (M1₁, M1₂).

4. Optical position measuring device according to Claim 1, **characterized in that** the following are provided as different optical properties in the cross grating (131.1; 231.1; 331.1; 431.1; 531.1; 631.1):
- different transmission properties, and/or
- different reflection properties, and/or
- different phase-shifting effects.

5. Optical position measuring device according to at least one of Claims 2-4, **characterized in that** the cross grating (131.1; 231.1; 331.1; 431.1) is in the form of a binary grating with two different optical properties and the grating lines (L1₁, L1₂, L2_{1,} L2₂) of the line grating in each case have the other optical property in relation to the optical properties of the first and second areal measurement graduation regions (M1₁, M1₂).

6. Optical position measuring device according to at least one of Claims 1-4, **characterized in that** the cross grating (531.1; 631.1) has spacer regions (M1₃) between the first and second areal measurement graduation regions (M1₁, M1₂), the said spacer regions having a third optical property which differs from the optical properties of the first and second areal measurement graduation regions (M1₁, M1₂).

7. Optical position measuring device according to Claim 6, **characterized in that** the spacer regions (M1₃) between the first and second areal measurement graduation regions (M1₁, M1₂) in each case have an identical width (P_{A1}, P_{A2}) along the longitudinal direction of extent (R_{L1}) and the transverse direction of extent (R_{Q1}).

8. Optical position measuring device according to Claim 6, **characterized in that** the spacer regions (M1₃) have a structured form.

9. Optical position measuring device according to at least one of the preceding claims, **characterized in that** the measurement graduation (41; 1141.1, 1141.2) of the second scale (40; 140.1, 140.2) is in the form of a reflective linear grating (141.1) which has measurement graduation regions (141.1a, 141.1b) with different phase-shifting effects on the beams reflected thereby arranged periodically along the direction of longitudinal extent (R_{L2}) of the second scale (40; 140.1, 140.2).

10. Optical position measuring device according to Claim 9, **characterized in that** the linear grating (141.1) of the second scale (40; 140.1, 140.2) has such a filter effect that certain orders of diffraction n > 1 are suppressed.

11. Optical position measuring device according to at least one of the preceding claims, **characterized in that** at least one of the measurement graduations (G1, G2, G3; 31, 41; 1131.1, 1131.2, 1141.1, 1141.2) further is designed such that the orders of diffraction emerging therefrom each have a defined polarization.

12. Optical position measuring device according to at least one of the preceding claims, **characterized in that** at least one of the scales (30, 40; 130.1, 130.2, 140.1, 140.2) is arranged tilted about its direction of longitudinal extent (R_{L1}, R_{L2}) .

13. Arrangement having a table and a plurality of optical position measuring devices according to at least one of the preceding claims, **characterized in that**
- the table (110) is arranged so as to be movable along two orthogonal measurement directions (x, y) in a horizontal movement plane, and
- two first scales (130.1, 130.2) are arranged on opposite sides of the table (110), and
- at least one second scale (140.1, 140.2) is arranged crossing at an angle of 90° and stationarily relative to the two first scales (130.1, 130.2), in a plane which is spaced apart from the horizontal movement plane along a direction (z), wherein this direction (z) is oriented orthogonal to the movement plane, and
- a plurality of sensing units (150.1-150.4) each comprising a light source and a detection unit are arranged stationarily adjacent to the opposite sides of the table (110) with the first measurement scales (130.1, 130.2).

14. Arrangement according to Claim 13, **characterized in that**
- the two first scales (130.1, 130.2) each have a reflective measurement graduation (1131.1, 1131.2) in the form of a two-dimensional cross grating (131.1; 231.1; 331.1; 431.1; 531.1; 631.1), which are arranged tilted about their direction of longitudinal extent (R_{L1}) relative to the horizontal movement plane, and
- the second scale (140.1, 140.2) comprises at least two reflective measurement graduations (1141.1, 1141.2, 1141.3, 1141.4) in two parallel tracks which extend parallel to the direction of longitudinal extent (R_{L2}), wherein the measurement graduations (1141.1, 1141.2, 1141.3, 1141.4) are each formed as reflective linear gratings which have graduation regions (1141.1a, 1141.1b, 1141.2a, 1141.2b) arranged periodically along the respective direction of longitudinal extent (R_{L2}) and wherein the grating planes of the reflective measurement graduations (1141.1, 1141.2, 1141.3, 1141.4) are oriented parallel to the horizontal movement plane.

## Revendications

1. Dispositif optique de mesure de position permettant de détecter la position relative d'au moins deux échelles (30, 40 ; 130.1, 130.2 ; 140.1, 140.2) qui sont disposées le long de deux directions de mesure (x, y) de manière mobile l'une par rapport à l'autre ainsi que dans différents plans et en croix l'une par rapport à l'autre, dans lequel
- le dispositif optique de mesure de position présente au moins deux échelles (30, 40 ; 130.1, 130.2 ; 140.1, 140.2), une source de lumière (LQ) et une unité de détection (DET),
- les deux échelles (30, 40 ; 130.1, 130.2 ; 140.1, 140.2) présentent respectivement au moins une graduation de mesure (G1, G2, G3 ; 31, 41 ; 1131.1, 1131.2, 1141.1, 1141.2) pourvue de zones de réseau, disposées périodiquement le long d'au moins une direction de mesure (x, y), avec des propriétés optiques différentes, et les directions d'extension longitudinale (R_{L1}, R_{L2}) des échelles (30, 40 ; 130.1, 130.2 ; 140.1, 140.2) sont orientées respectivement en parallèle à une première ou à une deuxième direction de mesure (x, y), et
- dans lequel lesdites au moins deux échelles (30, 40 ; 130.1, 130.2 ; 140.1, 140.2) sont conçues de telle sorte
- qu'une division d'un faisceau de rayons d'éclairage (S) émis par la source de lumière (LQ) en au moins deux faisceaux de rayons partiels (S1, S2) est effectuée au niveau de la première échelle (30 ; 130.1 ; 140.1), et
- que les faisceaux de rayons partiels (S1, S2) sollicitent ensuite la deuxième échelle (40 ; 130.2 ; 140.2) et subissent une rétroréflexion en direction de la première échelle (30 ; 130.1 ; 140.1), et
- que les faisceaux de rayons partiels (S1, S2) rétroréfléchis sont à nouveau incidents sur la première échelle (30 ; 130.1 ; 140.1) et y sont réunis à nouveau de sorte qu'ensuite au moins un faisceau de rayons de signal résultant (SB) se propage en direction de l'unité de détection (DET) qui permet de générer un ou plusieurs signaux de balayage dépendant de la position concernant le mouvement relatif des échelles (30, 40 ; 130.1, 130.2 ; 140.1, 140.2) le long de la première ou de la deuxième direction de mesure (x, y),
dans lequel la graduation de mesure (G1, G2, G3 ; 31, 41 ; 1131.1, 1131.2, 1141.1, 1141.2) d'au moins une échelle (30, 40 ; 130.1, 130.2 ; 140.1, 140.2) est réalisée comme un réseau croisé bidimensionnel (131.1 ; 231.1, 331.1 ; 431.1 ; 531.1 ; 631.1),
**caractérisé en ce que**
- le réseau croisé (131.1 ; 231.1, 331.1 ; 431.1 ; 531.1 ; 631.1) dispose d'un effet de filtre de telle sorte que des ordres de diffraction supérieurs gênants sont supprimés au niveau du réseau croisé (131.1 ; 231.1, 331.1 ; 431.1 ; 531.1 ; 631.1),
- dans lequel le réseau croisé (131.1 ; 231.1 ; 331.1 ; 431.1 ; 531.1 ; 631.1) présente des premières et deuxièmes zones de graduation de mesure planes (M1₁, M1₂), disposées en damier, avec différentes propriétés optiques, qui sont disposées en damier le long de la direction d'extension longitudinale (R_{L1}) périodiquement avec une première périodicité locale (P_{B1}) et le long d'une direction d'extension transversale (R_{Q1}) du réseau croisé (131.1 ; 231.1 ; 331.1 ; 431.1 ; 531.1 ; 631.1), qui est orientée orthogonalement à la direction d'extension longitudinale (R_{L1}), périodiquement avec une deuxième périodicité locale (P_{B2}), dans lequel un réseau linéaire périodique en une ou deux dimensions est superposé à la première et à la deuxième zone de graduations de mesure plane (M1₁, M1₂).

2. Dispositif optique de mesure de position selon la revendication 1, **caractérisé en ce que** le réseau linéaire présente dans chaque zone de graduations de mesure plane (M1₁, M1₂) respectivement une zone de réseau linéaire qui
- comprend au moins une première paire de lignes de réseau droites (L1₁, L1₂ ; L2₁, L2₂) qui s'étendent sur toute la longueur de la zone de graduations de mesure plane (M1₁, M1₂) et sont disposées en parallèle à une première direction d'extension (R_{L1}; R_{Q1}) à une première distance (d₁ ; d₂) l'une par rapport à l'autre, et
- comprend dans le cas d'un réseau linéaire bidimensionnel en outre une deuxième paire de lignes de réseau droites (L2₁, L2₂ ; L1₁, L1₂) qui s'étendent sur toute la longueur de la zone de graduations de mesure plane (M1₁, M1₂) et sont orientées le long d'une deuxième direction d'extension (R_{L1} ; R_{Q1}), qui est orientée perpendiculairement à la première direction d'extension (R_{Q1}; R_{L1}), à une deuxième distance (d₂ ; d₁) l'une par rapport à l'autre, et
- dans lequel les zones de réseau linéaire disposent le long de la première direction d'extension (R_{L1} ; R_{Q1}) de périodicités identiques à celles des zones de graduations de mesure planes (M1₁, M1₂) du réseau croisé (131.1 ; 231.1 ; 331.1 ; 431.1 ; 531.1 ; 631.1), et
- dans lequel, dans le cas d'un réseau linéaire bidimensionnel, les zones de réseau linéaire le long de la deuxième direction d'extension (R_{Q1} ; R_{L1}) disposent également des périodicités identiques à celles des zones de graduations de mesure planes (M1₁, M1₂) du réseau croisé (131.1 ; 231.1 ; 331.1 ; 431.1 ; 531.1 ; 631.1) .

3. Dispositif optique de mesure de position selon la revendication 2, **caractérisé en ce que** le long de la première direction d'extension (R_{L1} ; R_{Q1}) et/ou de la deuxième direction d'extension (R_{Q1} ; R_{L1}) respectivement au moins trois zones séparées les unes des autres par les lignes de réseau (L1₁, L1₂, L2_{1,} L2₂) sont présentes dans les zones de graduations de mesure planes (M1₁, M1₂).

4. Dispositif optique de mesure de position selon la revendication 1, **caractérisé en ce que**
- des propriétés de transmission différentes, et/ou
- des propriétés de réflexion différentes, et/ou
- des effets de décalage de phase différents
sont prévus en tant que propriétés optiques différentes dans le réseau croisé (131.1 ; 231.1 ; 331.1 ; 431.1 ; 531.1 ; 631.1).

5. Dispositif optique de mesure de position selon au moins l'une des revendications 2 à 4, **caractérisé en ce que** le réseau croisé (131.1 ; 231.1 ; 331.1 ; 431.1) est réalisé comme un réseau binaire avec deux propriétés optiques différentes, et les lignes de réseau (L1₁, L1₂, L2_{1,} L2₂) du réseau linéaire présentent respectivement l'autre propriété optique par rapport aux propriétés optiques de la première et de la deuxième zone de graduations de mesure plane (M1₁, M1₂).

6. Dispositif optique de mesure de position selon au moins l'une des revendications 1 à 4, **caractérisé en ce que** le réseau croisé (531.1 ; 631.1) présente entre la première et la deuxième zone de graduations de mesure plane (M1₁, M1₂) des zones d'espacement (M1₃) qui possèdent une troisième propriété optique qui est différente des propriétés optiques de la première et de la deuxième zone de graduations de mesure plane (M1₁, M1₂).

7. Dispositif optique de mesure de position selon la revendication 6, **caractérisé en ce que** les zones d'espacement (M1₃) entre la première et la deuxième zone de graduations de mesure plane (M1₁, M1₂) présentent le long de la direction d'extension longitudinale (R_{L1}) et de la direction d'extension transversale (R_{Q1}) respectivement une largeur (P_{A1}, P_{A2}) identique.

8. Dispositif optique de mesure de position selon la revendication 6, **caractérisé en ce que** les zones d'espacement (M1₃) sont réalisées de manière structurée.

9. Dispositif optique de mesure de position selon au moins l'une des revendications précédentes, **caractérisé en ce que** la graduation de mesure (41 ; 1141.1, 1141.2) de la deuxième échelle (40 ; 140.1, 140.2) est réalisée comme un réseau linéaire réfléchissant (141.1) qui présente le long de la direction d'extension longitudinale (R_{L2}) de la deuxième échelle (40 ; 140.1, 140.2) des zones de graduations de mesure (141.1a, 141.1b) disposées périodiquement avec différents effets de décalage de phase sur les faisceaux de rayons réfléchis par celles-ci.

10. Dispositif optique de mesure de position selon la revendication 9, **caractérisé en ce que** le réseau linéaire (141.1) de la deuxième échelle (40 ; 140.1, 140.2) possède un effet de filtre de telle sorte que certaines ordres de diffractions n > 1 sont supprimés.

11. Dispositif optique de mesure de position selon au moins l'une des revendications précédentes, **caractérisé en ce qu'**au moins l'une des graduations de mesure (G1, G2, G3 ; 31, 41 ; 1131.1, 1131.2, 1141.1, 1141.2) est en outre réalisée de telle sorte que les ordres de diffraction qui en résultent possèdent respectivement une polarisation définie.

12. Dispositif optique de mesure de position selon au moins l'une des revendications précédentes, **caractérisé en ce qu'**au moins l'une des échelles (30, 40 ; 130.1, 130.2, 140.1, 140.2) est disposée en étant basculée autour de sa direction d'extension longitudinale (R_{L1}, R_{L2}).

13. Agencement, comprenant une table ainsi que plusieurs dispositifs optiques de mesure de position selon au moins l'une des revendications précédentes, **caractérisé en ce que**
- la table (110) est disposée de manière mobile dans un plan de mouvement horizontal le long de deux directions de mesure orthogonales (x, y), et
- deux premières échelles (130.1, 130.2) sont disposées sur des côtés opposés de la table (110), et
- au moins une deuxième échelle (140.1, 140.2) est disposée en croix selon un angle de 90° ainsi que de manière stationnaire par rapport aux deux premières échelles (130.1, 130.2) dans un plan qui est le long d'une direction (z) espacé du plan de mouvement horizontal, cette direction (z) étant orientée orthogonalement au plan de mouvement, et
- de manière adjacente aux côtés opposés de la table (110) avec les premières échelles (130.1, 130.2), plusieurs unités de balayage (150.1 à 150.4) sont disposées de manière stationnaire et comprennent respectivement une source de lumière ainsi qu'une unité de détection.

14. Agencement selon la revendication 13, **caractérisé en ce que**
- les deux premières échelles (130.1, 130.2) présentent respectivement une graduation de mesure (1131.1, 1131.2) réfléchissante sous la forme d'un réseau croisé bidimensionnel (131.1 ; 231.1 ; 331.1 ; 431.1 ; 531.1 ; 631.1), qui sont disposées par rapport au plan de mouvement horizontal de manière basculée autour de leur direction d'extension longitudinale (R_{L1}), et
- la deuxième échelle (140.1, 140.2) présente au moins deux graduations de mesure (1141.1, 1141.2, 1141.3, 1141.4) réfléchissantes sur deux pistes parallèles qui s'étendent en parallèle à la direction d'extension longitudinale (R_{L2}), dans lequel les graduations de mesure (1141.1, 1141.2, 1141.3, 1141.4) sont respectivement réalisées comme des réseaux linéaires réfléchissants qui présentent des zones de graduations (1141.1a, 1141.1b, 1141.2a, 1141.2b) disposées périodiquement le long de la direction d'extension longitudinale (R_{L2}) respective, et dans lequel les plans de réseau des graduations de mesure réfléchissantes (1141.1, 1141.2, 1141.3, 1141.4) sont orientés en parallèle au plan de mouvement horizontal.
